# EUROPEAN PATENT SPECIFICATION

(11) **EP 3 669 106 B1**
(45) Date of publication and mention of the grant of the patent: **03.08.2022**
(21) Application number: 18846065.3
(22) Date of filing: 12.07.2018
(51) Int. Cl.: F16K 3/32, F24D 3/00, F24D 19/10, G05D 7/01, F24D 3/10, F16K 7/18

(54) **CONTROL VALVE FOR HEATING AND/OR COOLING SYSTEM**
REGELVENTIL FÜR HEIZ- UND/ODER KÜHLSYSTEM
SOUPAPE DE COMMANDE POUR SYSTÈME DE CHAUFFAGE ET/OU DE REFROIDISSEMENT

(30) Priority: 14.08.2017 DK PA201770613; 14.08.2017 DK PA201770612
(43) Date of publication of application: 24.06.2020
(60) Divisional application: 22180379.4
(73) Proprietor: Flowcon International ApS, 4200 Slagelse (DK)
(72) Inventor: IBSEN, Bjarne Wittendorff, 2900 Korsør (DK); MØLLER, Carsten Enøe, 4200 Slagelse (DK)
(74) Representative: Nordic Patent Service A/S
(86) International application number: PCT/DK2018/050183
(87) International publication number: WO 2019/034216

(56) References cited:
- EP-A1- 0 789 821
- EP-A1- 2 271 969
- EP-A1- 2 557 365
- EP-A1- 2 557 365
- EP-A1- 3 193 050
- WO-A1-01/88418
- WO-A1-95/12082
- WO-A1-2005/038316
- WO-A1-2008/052553
- WO-A1-2011/006559
- WO-A2-2009/135490
- WO-A2-2014/199302
- WO-A2-2015/010685
- DE-A1-102014 110 550
- US-A1- 2005 121 082
- US-A1- 2011 186 147
- US-A1- 2015 198 258

## Description

### TECHNICAL FIELD

The disclosure relates to control valves that includes a differential pressure control function, in particular to control valves for control of fluid in a heating and/or cooling installation of e.g. a building, a ship or a plant. The disclosure also relates to a manifold with control valves for a heating and/or cooling installation of a building, ship or plant and to a heating and/or cooling installation of the building, ship or plant.

### BACKGROUND

Buildings are provided with heating and/or cooling systems (HVAC) that include a plurality of individual circuits that each require a flow of heating or cooling liquid through the individual circuit concerned. An individual circuit can be a loop in a floor heating system that covers a particular area, a loop in a sealing cooling system that covers a particular area, a loop including one or more space heating radiators and combinations thereof. Even for relatively small buildings such as domestic housing the number of individual circuits is normally more than five and often more in the region of ten individual circuits. In order to ensure good climatization and efficient use of energy it is required that the circuits are well balanced, i.e. it is avoided that certain individual circuits receive too much flow path others received too little flow. The cooling or heating liquid, typically water needs to be distributed through the heating system in a predetermined calculated way that takes into account the characteristics of each individual circuit. To balance such a heating and/or cooling system in accordance with the predetermined distribution, a flow control valve is placed in the return line of each individual circuit. Often, a plurality of flow control valves is arranged in a manifold for ease of installation and maintenance, e.g. all the return lines of the floor heating system of a particular floor in the house are connected to a single manifold comprising flow control valve for each return line. The flow control valves can be provided with electrically operated actuators that can open and close the flow control valve associated therewith.

WO2011006559 discloses a manifold with a pre-adjustable flow-rate controller for heating systems, comprising a housing, which has a heating medium feed connection, a heating medium drain connection, and a pre-adjustment connection, and comprising a rate regulating insert, which changes the flow cross-section for the heating medium depending on the pressure in the rate regulating insert. In this manifold the flow rate is 02770-PCT-EP not independent of the pressure differential and this manifold does not provide the accuracy required for contemporary high efficiency flooring systems.

Consequently, there is a need for a floor heating system and a manifold for such a floor heating system that overcomes or at least reduces the problems indicated above.

The above-mentioned type of control valve is used for hydraulic balancing in a system that comprises a large number of individual heating circuits. These control valves are used to control the flow of heating or cooling fluids through individual circuits in the system, and thus ensure that each individual heating circuit is provided with a desired flow of heating or cooling liquid so that the whole system is balanced. An individual heating circuit can be a section of a floor heating, of a ceiling cooling system, a space heating radiator or a group of several space heating radiators.

This type of control valve is provided with a differential pressure control function that includes a movable throttling element that is affected on one side by a first pressure P1 and on the other side by second pressure P2 and a resilient force, for example from a helical spring. The second pressure P2 is lower than the first pressure P1 and the characteristics of the resilient force determine the pressure differential that is maintained. Thus, a stiffer spring results in a higher differential pressure. Such a differential pressure control function is e.g. used to maintain a constant differential pressure over an adjustable size opening. With a constant differential pressure over the adjustable size opening the flow can be accurately regulated by adjusting the adjustable size opening. The adjustable size opening can be manually adjusted or be adjusted using an actuator, such as an electric actuator. The adjustment can be automatic by an electronic control unit or be in response to a control signal. Typically, adjustment is manual, and the control valves are arranged in the return line.

However, there are other ways to use a differential pressure function in a control valve that do not relate to an adjustable size opening.

WO2008052553 discloses a control valve with a rolling membrane as the throttling member and the resilient force comes from a helical spring acting on the rolling membrane. The first higher pressure P1 and the second low pressure P2 originate both on one of the same side of the rolling membrane. Therefore, a pressure communication channel is provided in a central shaft that extends through the rolling membrane for communicating the first high pressure P1 to the opposite side of the rolling membrane. The central shaft extends through a collar in a central opening in the rolling membrane. The collar fits slidingly over the central shaft since the rolling membrane must be allowed to move freely in response to the first pressures P1 on its one side and the second pressure P2 and the helical spring on its other side. The rolling membrane must therefore be free move relative to the central shaft. A small clearance is needed between the collar and the central shaft to ensure free movement of the rolling membrane. However, such a clearance will always form a leak path and consequently, it is not possible to avoid small amount of leakage even if the valve of WO2008052553 is in its fully closed position. Though small, such leakage may over time accrue and form a substantial energy loss for the system in which is used.

Both EP789821 and US 2015/0198258 discloses a control valve according to the preamble of claim 1.

The valve of US 2015/0198258 is configured for controlling flow of liquid in a heating and/or cooling installation, and the control valve comprises: a pressure regulating arrangement configured for maintaining a substantially constant differential pressure between a first pressure (P1) in the control valve and a second pressure (P2) in the control valve, the pressure regulating arrangement comprises a movable throttle member that is urged by the first pressure (PI) to increase the flow resistance posed by the pressure regulating arrangement and that is urged by a resilient member and by the second pressure (P2) to decrease the flow resistance posed by the pressure regulating arrangement, the movable throttle member comprising a rolling diaphragm that interacts with a plurality of exit openings, the rolling diaphragm having a circular circumference attached to an annular body that is arranged in the control valve, the plurality of exit openings being formed radially through the annular body, having a pressure communication channel that communicates the pressure P1 at the inlet to the bottom end of the valve housing. This enables an actuator to close off the valve completely, so that no leak can occur between the inlet and the outlet. However, this solution only applies to the situation where the valve is completely closed, and leak across the membrane still occurs when the valve is not completely closed.

EP2557365 discloses a fluid distribution control system having at least two temperature control circuits. To simplify the installation and for energy optimizing, a pressure regulating unit is disposed in each circuit. The pressure regulating units provide a constant pressure difference over the respective circuit.

Consequently, there is a need for a control valve that overcomes or at least reduces the problems indicated above.

### SUMMARY

The foregoing and other objects are achieved by the features of the independent claims. Further implementation forms are apparent from the dependent claims, the description and the figures.

According to a first aspect, there is provided a control valve for controlling flow of liquid in a heating and/or cooling installation, the control valve comprising a pressure regulating arrangement configured for maintaining a substantially constant differential pressure between a first pressure P1 in the control valve and a second pressure P2 in the control valve, the pressure regulating arrangement comprises a movable throttle member that is urged by the first pressure to increase the flow resistance posed by the pressure regulating arrangement and that is urged by a resilient member and by the second pressure P2 to decrease the flow resistance posed by the pressure regulating arrangement, the movable throttle member comprising a rolling diaphragm that interacts with a plurality of exit openings, the rolling diaphragm having a circular circumference attached to an annular body that is arranged in the control valve, the plurality of exit openings being formed radially through the annular body, characterized by at least one pressure communication channel extending in the annular body for communicating the first pressure P1 from a first location in the control valve on one axial side of the rolling diaphragm to a second location in the control valve on the other axial side of the rolling diaphragm.

By providing the pressure communication channel that communicates the first pressure P1 to the opposite side of the rolling diaphragm, without creating a passage through the rolling diaphragm it becomes possible to create a differential pressure control valve that does not have any leakage across the rolling diaphragm. Thus, process can be reduced and the control valve can be completely closed.

In a possible implementation of the first aspect the pressure communication channel opens to two axially spaced openings in the annular body.

In a possible implementation of the first aspect the exit openings 18 are axially extending elongated openings, and wherein the pressure communication channel axially extends between two axially extending exit openings.

In a possible implementation of the first aspect the control valve comprises a plurality of pressure communication channels, each pressure communication channel of the plurality extending between two axially extending exit openings.

In a possible implementation of the first aspect the plurality of exit openings are circumferentially distributed over the circumference of the annular body.

In a possible implementation of the first aspect the rolling diaphragm comprises a continuous body of material.

In a possible implementation of the first aspect the rolling diaphragm does not have any through going openings.

In a possible implementation of the first aspect the control valve further comprises a flow area regulator for regulating a flow area of at least one variable size entry opening through which the liquid flowing through the control valve 1 from an inlet opening to an outlet opening must pass.

In a possible implementation of the first aspect the control valve comprises an elongated, preferably rotation symmetric, valve body with opposite first and second longitudinal ends, the first end being provided with a with a closable inlet opening.

In a possible implementation of the first aspect the rolling diaphragm is provided with a ridge along its outer circumference, and wherein the ridge is provided with one or more apertures that connect to the at least one pressure communication channel.

In a possible implementation of the first aspect the annular body is provided with a rim, an axial side of the rim being provided with a groove for at least partially receiving an O-ring, and wherein the rim is provided with a plurality of recesses for allowing passage of liquid.

According to a second aspect of the invention, there is provided a manifold for a heating system with a plurality of circuits according to claim 14.

By providing a floor heating manifold with a plurality of constant differential pressure control valves in the pressure drop across an adjustable opening in such valves can be controlled accurately and thus, the flow setting becomes directly correlated to the size of the adjustable opening and thus, the flow can be controlled more accurately.

According to a possible implementation of the second aspect the control valve is provided with an inlet opening at the fourth axial end, the inlet opening being in fluidic communication with a lumen in the socket.

According to a possible implementation of the second aspect the control valve is provided with at least one outlet opening that is in fluidic communication with the interior of the tubular housing.

According to a possible implementation of the second aspect the manifold further comprises a flow area regulator for regulating a flow area of at least one variable size entry opening through which the liquid flowing through the control valve from the inlet opening to the outlet opening must pass.

According to a possible implementation of the second aspect the arrangement for maintaining a constant differential pressure maintains a constant differential pressure over the adjustable size opening.

According to a possible implementation of the second aspect a portion of the control valve projects through an opening in the tubular body opposite to a socket.

According to a possible implementation of the third aspect a portion of a socket projects through an opening in the tubular body.

According to a possible implementation of the second aspect the third end of the valve body is threadedly coupled to the socket.

These and other aspects will be apparent from and the embodiment(s) described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Figs. 1 and 2 are different side views of a control valve,
Figs 3,4 and 6 are longitudinal-sectional views of the control valve of Figs. 1 and 2,
Fig. 5 is a cross-sectional view of the control valve of Figs. 1 and 2,
Fig. 7 is a longitudinal-sectional view of a functional element of Figs. 1 and 2, the functional element including a constant pressure differential function and a flow area adjustment function,
Fig. 8 is an enlarged detail of Fig. 7,
Fig. 9 is an exploded view of the valve of Figs. 1 and 2,
Fig. 10 is an enlarged longitudinal-sectional view of the valve of Figs. 1 and 2 in an open position, but with internal thread instead of external threat for coupling an actuator to the control valve,
Fig. 11 is an enlarged longitudinal-sectional view of the valve of Fig. 10 in a closed position,
Figs. 12 and 13 show a plurality of control valves in a manifold of a floor heating or ceiling cooling system,
Figs. 14 and 15 show the manifold and control valves of Figs. 12 and 13 in cross-sectional and longitudinal-sectional view, respectively,
Fig. 16 is a longitudinal-sectional view of another embodiment of the functional element of Fig. 7,
Fig. 17 is a top view of the functional element of Fig. 16,
Fig. 18 is an exploded elevated view including an enlarged section of the inner components of the functional element of Fig. 16,
Fig. 19 is a exploded side view of the inner components of the functional element of Fig. 16,
Fig. 20 is a longitudinal-sectional view of another embodiment of the functional element of Fig. 7,
Fig. 21 is a top view of the functional element of Fig. 20,
Fig. 22 it is an exploded elevated view including an enlarged section of the inner components of the functional element of Fig. 20,
Fig. 23 is an exploded side view of the inner components of the functional element of Fig. 16.
Figs. 24 and 25 are cross-and longitudinal-sectional views of another manifold for a floor heating system with a control valve, and
Fig. 26 is a diagrammatic representation of a floor heating system with a manifold control valves including the actuators associated with the control valves.

### DETAILED DESCRIPTION

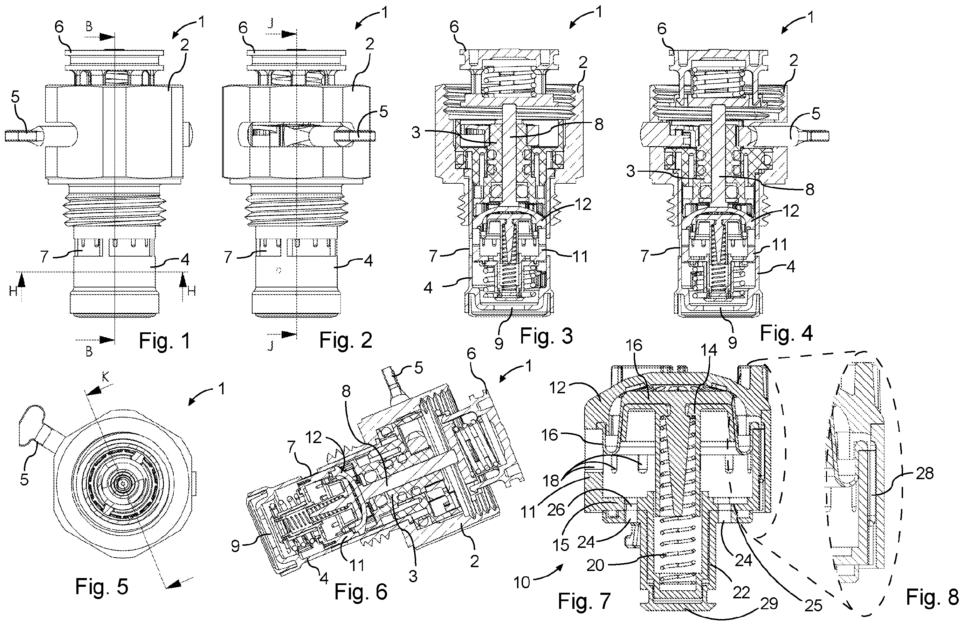

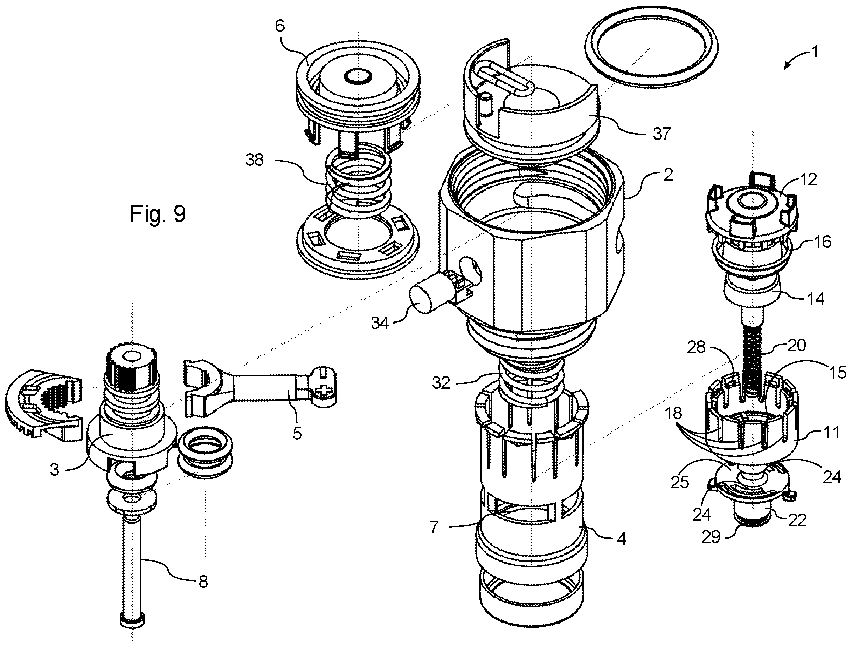

A control valve is described with reference to Figs. 1 to 15. The control valve 1 comprises a valve body 2. The valve body 2 is generally rotation symmetric and comprises a part with a hexagonal outer contour and a cylindrical part 4. It should though be noted that the part with the hexagonal order does not need to have a hexagonal outer shape, the skilled person is familiar with other suitable shapes, such as e.g. a simple cylindrical shape.

The valve body 2 is at or near one of its longitudinal ends provided with thread for coupling with a linear actuator provided with corresponding thread, such as an electric actuator (not shown). The valve body 2 is also provided with thread for engaging thread of a housing or body, such as a manifold 40. Both the cylindrical part 4 and the part with the hexagonal outer have a hollow interior in which most of the components of the control valve 1 are arranged.

An axially movable activator 6 protrudes from the longitudinal end of the valve body 2 where the thread for coupling to an actuator is provided. The activator 6 protrudes from the valve body 2 for engaging an actuator (not shown). The activator 6 is arranged in to parts with a helical spring 38 therebetween in order to avoid application of excessive force to the components in control valve 1 by an actuator.

The opposite longitudinal end is part of the cylindrical part 4. The opposite longitudinal end is provided with an axial inlet opening 9. The cylindrical part 4 is provided with one or more radial outlet openings 7. The control valve 1 controls the flow from the axial inlet opening 9 to the radial outlet opening(s) 7.

Hereto, the control valve 1 comprises an arrangement for maintaining a constant differential pressure and an arrangement for adjusting the size of an adjustable size opening. In an embodiment the arrangement for maintaining the constant differential pressure maintains a constant differential pressure over the adjustable size opening.

An annular body 11 is disposed slidably inside the cylindrical portion 4 of the valve body 2, such that the annular body can rotate relative to the valve body 2 and move in the axial direction relative to the valve body 2. The fit between the annular body 11 and the cylindrical portion 4 is such that it is substantially sealing.

The differential pressure control function comprises a throttling member in the form of a rolling diaphragm 16. The rolling diaphragm 16 has a circular outer circumference that is secured to the annular body 11. The rolling diaphragm is supported by a diaphragm support member 14. A helical spring 20 acts on the diaphragm support member 14 and urges the rolling diaphragm 16 in a direction that reduces the throttling effect of the rolling diaphragm 16.

The annular body 11 is provided with a plurality of exit openings 18. The exit openings 18 extend radially through the annular body 11. The exit openings 18 can be formed as longitudinal slits that extend axially. The exit openings 18 are preferably circumferentially evenly distributed over the annular body 11.

The axial end of the annular body 11 closest to the axial inlet opening 9 is closed off by a bottom in the form of a disc member 15. The disc member 15 is provided with one or more first regulation openings 26.

The axial end of the annular body 11 furthest from the axial inlet opening is provided with a cover 12. The cover 12 is provided with a number of through going openings for pressure equalization.

The bottom with the disc member 15 is rigidly connected to annular body 11 and can be formed as an integral part of the annular body 11. The cover 12 is rigidly connected to the annular body 11.

A central cylindrical portion extends from the disc member 15 and is in an embodiment and integral part of the annular body 11. The central cylindrical portion serves as a shaft for a cylindrical part 22. The cylindrical part 22 moves axially in unison with the annular body 11 and is rotatably suspended from the annular body 11. The cylindrical part 22 is provided with a closing member 29. The closing member 29 is configured to be able sealingly close the axial inlet opening 9. Hereto, the closing member 29 is advantageously the provided with an O-ring. The closing member 29 essentially consists of a cylindrical body that sealingly fits in the circular outline of the axial inlet opening 9.

The cylindrical part 22 can move axially relative to the valve body 2. However, the cylindrical part 22 it is prevented from a rotational movement relative to the valve body 2.

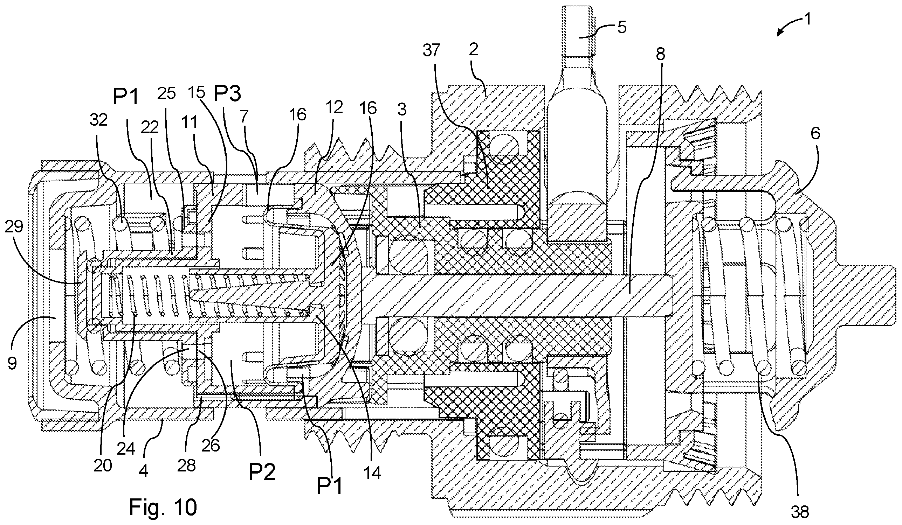

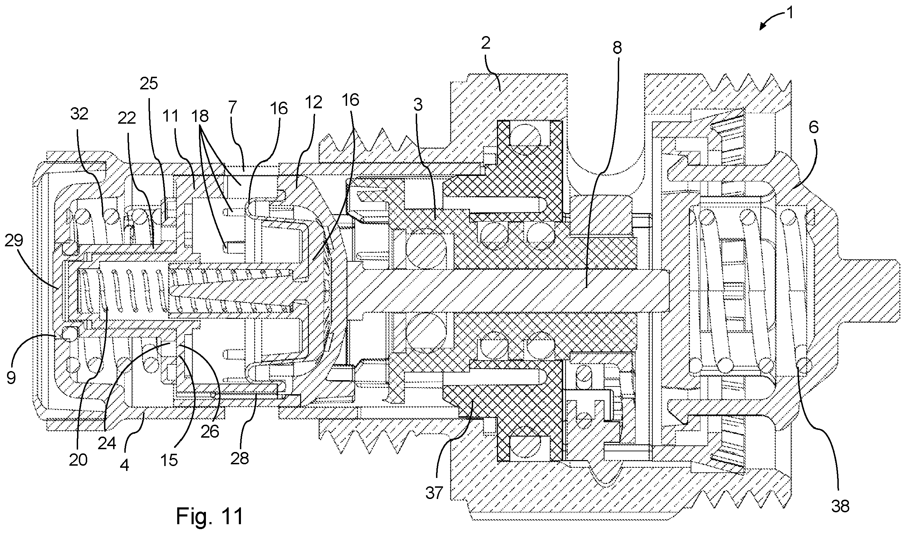

Thus, the annular body 11 and the cylindrical part 22 form together an axially movable unit 10. Figs. 7 and 8 show the unit 10 in detail. Fig. 10 shows the axially movable unit 10 in a position where the closing member 29 does not close the axial inlet opening 9 and Fig. 11 shows the axially movable unit 10 in a position where the closing member 29 sealingly closes the inlet opening 9. Thus, in the position shown in Fig. 11 the control valve is completely closed and does not have any leakage.

The unit 10 is biased to the open position by a helical spring 32. The unit 10 can be moved against the bias of the helical spring 32 by applying force to the activator 6 (e.g. by using an actuator). The force of the activator 6 is transmitted to the cover 12 of the unit 10 by a central shaft 8. The central shaft 8 is sealed by an O-ring against an insert 37.

The cylindrical part 22 supports a plate member 25. The plate member 25 is urged onto the disc member 15 by the helical spring 32. Thus, the side furthest from the inlet opening 9 of the plate member 25 is pressed onto the side closest to the inlet opening 9 of the disc shaped member 15. The plate member 25 is provided with at least one second regulation opening 24 for interacting with the first regulation opening 26. One side of the plate member 25 is in contact with the side of said disk shaped element 25 closest to said inlet opening 9. The plate element 25 is arranged to move axially in unison with the annular body 11 and the plate element 25 is rotationally immovable relative to the cylindrical portion 4 of the valve body 2.

Rotation of the annular body eleven relative to the valve body 2 and thus relative to the plate member 25 establishes a greater or smaller overlap between the at least one first regulation opening 26 and the at least one second regulation opening 24.

Thus, greater or smaller overlap may be established between the at least one first regulation opening 26 and the at least one second regulation opening 24 by the rotation of the annular body 11 relative to the valve body 2. The size of the overlap can be used to determine the flow area of the adjustable opening through which the liquid that flows through the control valve one needs to pass. The differential pressure regulation function ensures that the pressure differential over the adjustable size opening is constant, thereby allowing very precise control of the flow.

Fig. 10 illustrates the areas in the valve where the first pressure P1 resides and the area in the valve where the second pressure P2 resides. Pressure P1 resides in the inlet area of the control valve. Pressure P2 is established through a pressure drop over the adjustable size opening and acts on the same side of the rolling diaphragm 16 as the helical spring 20. Pressure P3 is the pressure at the outlet 7 of the control valve 1 and is established by a pressure drop from the second pressure P2 over the exit openings 18. The threat for coupling the control valve 1 shown in Figs. 10 to 15 to an actuator is than external threat, whereas the threat for coupling the control valve 1 shown in Figs. 1 to 9 is an internal threat. Both types of threat and other coupling means can be used interchangeably for coupling actuator to the control valve 1.

Pressure P1 needs to be communicated to the side of the rolling diaphragm 16 furthest from the axial inlet opening 9. At least one pressure communication channel 28 is provided in the annular body 11 for communicating the first pressure P1 from a position on the axial extremity of the annular body 11 closest to the longitudinal end of the control valve 1 with the inlet opening 9 to a position on the other side of the rolling diaphragm 16. Hereto, at least one pressure communication channel 28 extends substantially axially through the annular body 11. In an embodiment, a pressure communication channel 28 extends axially between two axially extending exit openings 18. The at least one pressure communication channel 28 opens to the axial extremity of the annular body 11 closest to the inlet opening 9, i.e. to the chamber with the first pressure P1.

Thus, liquid can flow from the chamber with the first pressure P1 in the cylindrical portion of 4 and from there into the pressure communication channels 28, regardless of the relative rotational position between the plate member 25 and the annular body 11 and via the communication channel 28 to the opposite side of the rolling diaphragm 16, without the need for any opening in the rolling diaphragm 16. Thus, the rolling diaphragm 16 can be made from a single piece of material without any through going hole in it.

A handle 5 for manual adjustment of the rotational position of the annular body 11 protrudes through a circumferentially extending slot in the valve body 2. The handle 5 engages an interconnecting cylindrical member 3 that is arranged to rotatably move relative to the valve body 2. The interconnecting cylindrical member 3 is sealed against an insert 37 by means of O-rings. The insert 37 is statically disposed in the valve body 2 and sealed against the valve body 2 by an O-ring. The insert 37 is provided with a central bore through which the interconnecting cylindrical member 3 passes with a sealing fit provided by O-rings. This allows the interconnecting cylindrical member 3 to move rotationally relative to the valve body 2 in a sealing manner. The interconnecting cylindrical member 3 is connected to a cover 12 of the annular body 11. The cover 12 is rigidly connected to the annular body 11. Rotational movement of the handle 5 is transmitted to the annular body 11 via the interconnecting cylindrical member 3 and the cover 12. The position of the handle 5 is secured against unintentional change of position by a locking member 34.

The central shaft 8 extends through a central bore in the interconnecting cylindric member 3. The central shaft 8 extends axially between the activator 6 and the cover 12 and thus transmits axial force from the activator to the annular body 11. This axial force, that can originate form an electric or other type actuator urges the annular body 11 axially in the direction of the axial inlet opening 9 against the action of the helical spring 32. When sufficient axial force is applied to the activator 6, the annular body 11 together with the cylindrical part 22 with its closing member 29 are pushed towards the axial inlet opening 9 until the closing member 9 engages the inlet opening, thereby closing the inlet opening sealingly. This closed position of the control valve 1 is illustrated in Fig 11. The open position of the control valve 1 where no force is applied to the activator 6 is shown in Fig. 10. The actuator can therefore be a simple "on/off' type linear actuator that either applies a force or does not, although a more sophisticated type of linear actuator that can be commanded to move to a desired position can also be used.

When the control valve 1 is open, the size of the adjustable size opening is adjusted by rotation of the annular body 11 relative to the valve body 2 and thus relative to the plate member 25 so that the overlap between the first regulation opening 26 and the second regulation opening 24 changes.

The pressure drop from the first (inlet) pressure P1 to the second (intermediate) pressure P2 is kept constant by the rolling diaphragm 16 that finds its position under the balance of the pressures and the spring force acting on the rolling diaphragm 16. The flow though the exit openings 18 is restricted to a degree depending on the position of the rolling diaphragm 16 and causes the pressure drop from the second (intermediate) pressure P2 to the third (outlet) pressure P3.

The control valve 1 is suitable for use in a manifold 40, such as for example a manifold for a floor heating system. Hereto, the control valve 1 is installed in the manifold using the outer thread on the valve body 2 that engages corresponding thread in the manifold 40. The manifold 40 is preferably provided with fittings 42 that engage the longitudinal end of the valve body 2 with the axial inlet opening 9. Thus, the supply of the first pressure P1 can take place through a manifold 42.

In the shown embodiments, the rotational position of the annular body 11 is adjusted manually using the handle 5. However, the rotational position of the annular body 11 may in not shown embodiments be adjusted by an actuator or the like, e.g. under control from an electronic control unit.

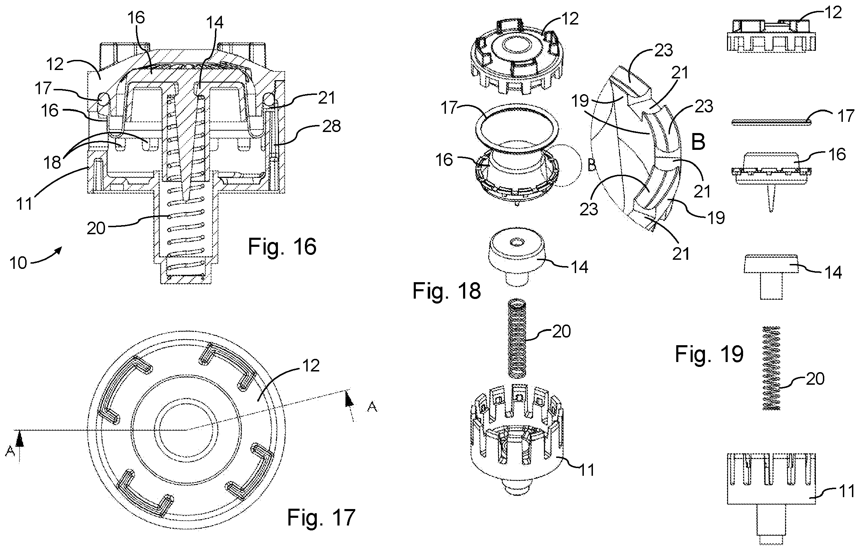

Figs. 16 to 19 illustrate another embodiment of the functional element 10 that is used in the control valve 1. The functional element 10 of this embodiment essentially identical to the functional element 10 described with reference to Figs. 1 to 15, except for the following features. The circumferential edge of the rolling diaphragm 16 is not provided with a ridge that seals against the cover 12. Instead, the annular body 11 is provided with a rim 19 that is interrupted by recesses 21 for allowing passage of liquid. The axial side of the rim is provided with a groove 23 in which an O-ring 17 is partially received for supporting the O-ring 17. The O-ring 17 seals against the cover 12. The pressure communication conduit 28 passes on the radially outer side of the (outer) circumference of the rolling diaphragm 16 and connects to the recesses 21 to thereby establish fluid communication to the opposite side of the rolling diaphragm (opposite to the pressure chamber P1). In an embodiment the number of recesses 21 corresponds to the number of pressure communication conduits 28. In an embodiment, the recesses 21 are distributed over the circumference of the ring 19, and preferably equally spaced.

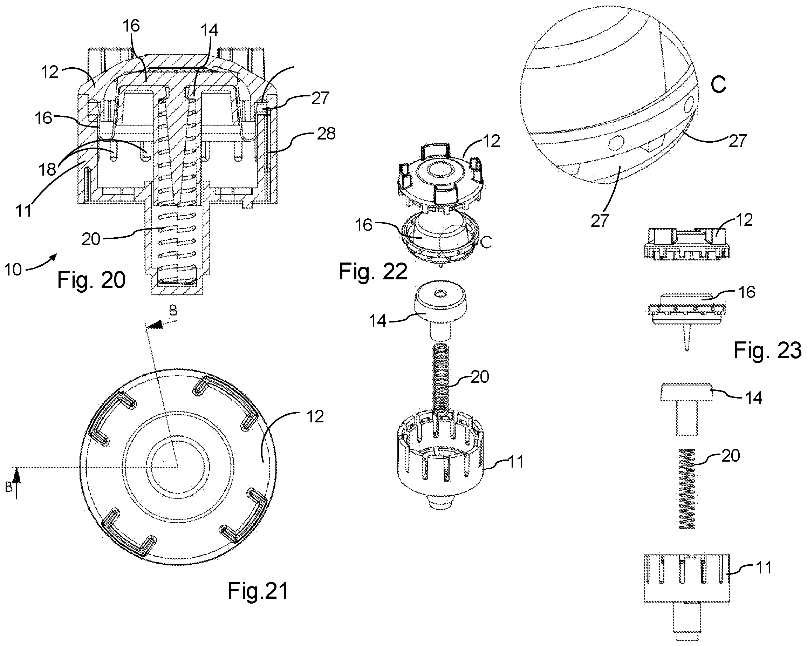

Figs. 20 to 23 illustrate yet another embodiment of the functional element 10 that is used in the control valve 1. The functional element 10 of this embodiment essentially identical to the functional element 10 described with reference to Figs. 1 to 15, except for the following features. The circumferential edge of the rolling diaphragm 16 is provided with a ridge 30 that seals against the cover 12. The ridge 30 is provided with apertures 27 that connect to the pressure communication conduit 28. The ridge 30 seals against the cover 12. The pressure communication conduits 28 passes that on the radially outer side of the (outer) circumference of the rolling diaphragm 16 and of the ridge 30 and connects to the apertures 30 to thereby establish fluid communication to the opposite side of the rolling diaphragm (opposite to the pressure chamber P1). Also in this embodiment, the (outer) circumference of the rolling diaphragm 16 is along all of its length secured to an edge of the annular body 11 and the rolling diaphragm 16 itself does not have any through going openings that could cause leakage. Only the ridge 30 is provided with apertures, but this ridge is provided on the circumference of the rolling diaphragm 16 with the apertures only going through the ridge 30. In an embodiment, the number of apertures 27 is equal to the number of pressure communication conduit 28. In an embodiment, the apertures 27 distributed over the circumference of the ridge 30, and preferably equally spaced.

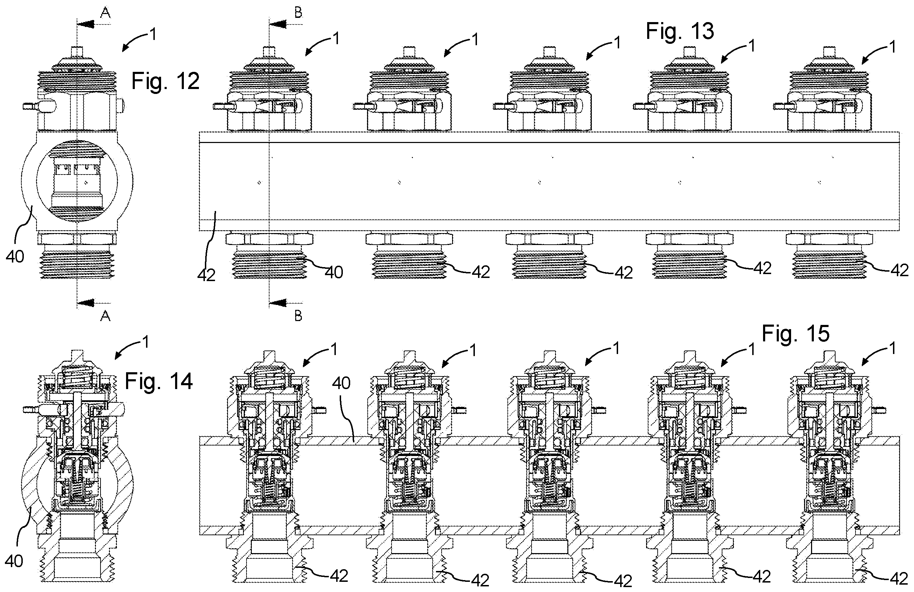

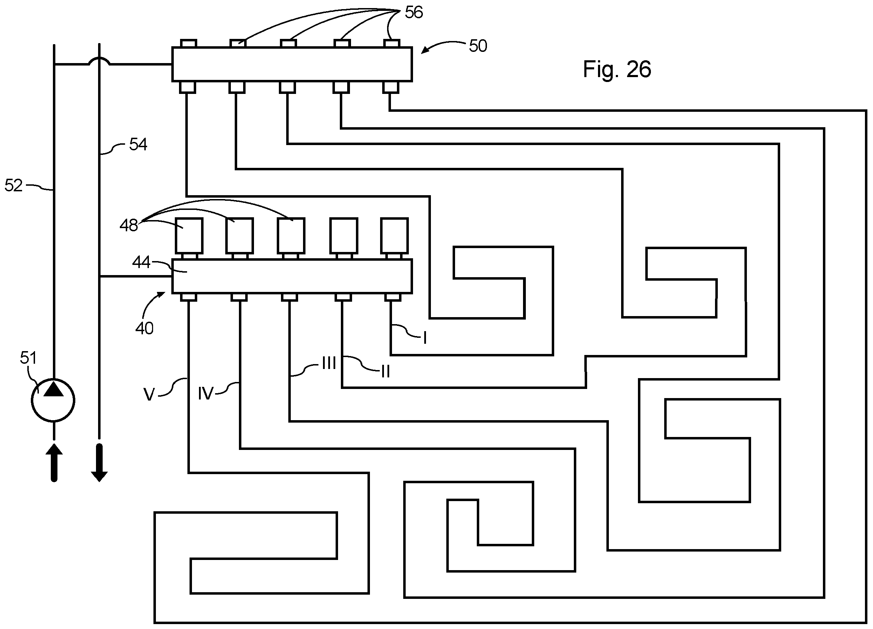

A manifold 40 for e.g. a floor heating system is described with reference to Figs. 12 to 15 and 24 and 25. A floor heating system comprising the manifold 40 is described with reference to Fig. 26. A control valve 1 for use in the manifold 40 is described above. The manifold 40 is configured to be connected to control the flow of a floor heating system with a plurality of circuits I,II,III,IV,V. The manifold 40 has an elongated tubular housing 44, of conventional material and has a hollow interior.

Either of the longitudinal ends of the housing 44 functions as an outlet 43 (outlet opening) with the opposite longitudinal end being closed by a plug (not shown).

The housing 44 is provided with plurality of sockets 42 for connection to respective return lines of circuits I,II,III,IV,V of the floor heating system.

The sockets 42 are provided with a lumen through which liquid (e.g. water) can flow through the socket 42 from one end to the other. The sockets 42 are provided with external thread or alternatively internal thread for engaging the coupling means for coupling the socket 42 to the return lines of the circuits. The socket 42 is also be provided with external thread for engaging a threaded hole in the housing 44 to install the socket 42 sealingly in the housing 44. However, it is understood that other conventional ways of securing the socket 42 in the housing 44 could be used.

When installed in the housing 44 the socket 42 extends through a wall of the housing 44 and protrudes into the hollow interior of the housing 44.

The end of the socket 42 that protrudes into the housing 44 is configured to sealingly engage a first longitudinal end of a control valve 1.

The manifold 40 is provided with a plurality of flow control valves 1, with the number of control valves corresponding to the number of circuits of the floor heating system. Thus, each flow control valve 1 is associated with one of the sockets 42.

Each of the flow control valves 1 has an elongated body 4, with a first longitudinal end that sealingly engages a socket 42 and a second longitudinal end for coupling to an actuator 48.

The flow control valves 1 are provided with an inlet 9 in fluidic connection with the socket 42 associated with the flow control valve 1 concerned, and at least one outlet 7 in fluidic connection with the manifold outlet 43.

The flow control valves 1 are also provided with a pressure regulating arrangement configured for maintaining a substantially constant differential pressure between a first pressure P1 in the control valve 1 and a second pressure P2 in the control valve 1.

The control valves 1 are provided with an axial inlet opening 9 at their first axial end. The axial inlet opening 9 is in fluidic communication with the lumen in the socket 42. The control valves 1 are also provided with at least one outlet opening 7 that is in fluidic communication with the interior of the tubular housing 44.

The control valves 1 comprise a flow area regulator for regulating a flow area of at least one variable size entry opening through which the liquid flowing through the control valve 1 from the inlet opening 9 to the outlet opening 7 must pass. The arrangement for maintaining a constant differential pressure maintains a constant differential pressure over the adjustable size opening.

A portion of the control valve 1 protrudes into the tubular housing 44 through an opening in the tubular body 44. The opening through which the control valve projects 1 is arranged directly opposite to a socket 42. A portion of a socket 42 projects through an opening in the tubular housing 44 to the first longitudinal of the control valve 1.

In an embodiment shown in Figs. 12 to 15 the first longitudinal end of the control valve 1 abuts sealingly with the end of the socket 42 that projects into the housing 44. Hereto, the first longitudinal end of the control valve 1 is flat so that it matches the flat end of the socket 42. The axial inlet opening 9 is arranged centrally in the flat end of the control valve 1. In this embodiment, the control valve 1 is provided with external threat that engages a threaded hole in the tubular housing 44.

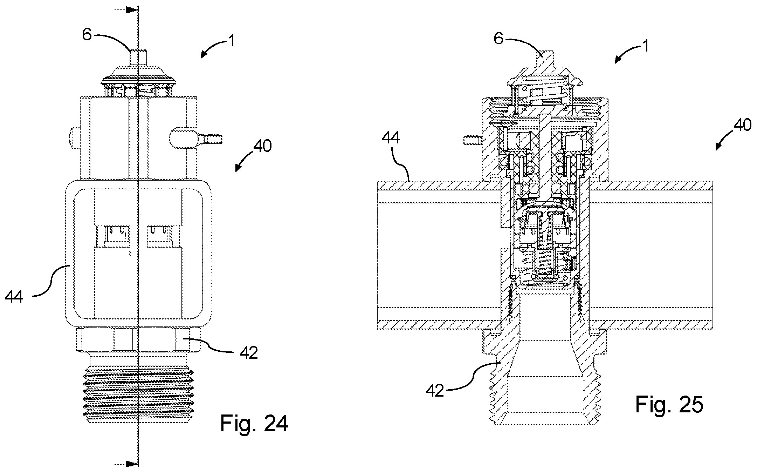

In embodiment shown in Figs. 24 and 25, the first longitudinal end of the control valve 1 is provided with thread and the portion of the socket 42 that projects into the tubular housing 44 is provided with matching thread and the control valve 1 is in threaded connection with the socket 42. The first longitudinal end of the control valve 1 may be provided with internal thread and the portion of the socket 42 protruding into the tubular housing 44 may be provided with external thread. However, the threaded arrangement may also be applied vice versa with the internal thread on the socket and the external thread on the first longitudinal end of the control valve 1.

The second longitudinal end of the control valve 1 protrudes from the tubular body 44.

An activator 6 protrudes from the valve body 2 at the second longitudinal end of the control valve 1. The second longitudinal end is provided with coupling means, such as e.g. thread for coupling to thread of an actuator 48, such as e.g. a linear actuator 48. The linear actuator 48 is in an embodiment a provided with an electronic control unit that is configured to operate the control valve 1 in accordance with the flow characteristics of the control valve 1. However, also a simple on/off type actuator 48 can be used for controlling the position of the control valve 1.

The floor heating system comprises a manifold 40 connected to the return end of a plurality of individual floor heating circuits I, II, III, IV. The floor heating system further comprises a feed conduit 52 and a return conduit 54. The outlet 43 of the manifold 40 is connected to the return conduit 54

The inlet ends of the plurality of individual floor heating circuits I,II,III,IV are connected to a second manifold 50. An inlet of the second manifold 50 is connected to the feed conduit 52. The second manifold 50 is provided with units 56, which units 56 can either be simple plugs, flow indicators or simple manually operated on off valves.

The feed conduit 52 is provided with a feed pump 51 and the feed conduit 52 and return conduit 54 are connected to a heating unit or to cooling equipment.

The various aspects and implementations has been described in conjunction with various embodiments herein. However, other variations to the disclosed embodiments can be understood and effected by those skilled in the art as defined in the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. The reference signs used in the claims shall not be construed as limiting the scope.

## Claims

1. A control valve (1) for controlling flow of liquid in a heating and/or cooling installation, said control valve (1) comprising:
a pressure regulating arrangement configured for maintaining a substantially constant differential pressure between a first pressure (P1) in said control valve (1) and a second pressure (P2) in said control valve (1),
said pressure regulating arrangement comprises a movable throttle member (16) that is urged by said first pressure (P1) to increase the flow resistance posed by the pressure regulating arrangement and that is urged by a resilient member (20) and by the second pressure (P2) to decrease the flow resistance posed by said pressure regulating arrangement,
said movable throttle member comprising a rolling diaphragm (16) that interacts with a plurality of exit openings (18),
said rolling diaphragm (16) having a circular circumference attached to an annular body (11) that is arranged in said control valve (1),
said plurality of exit openings (18) being formed radially through said annular body (11), **characterized by** at least one pressure communication channel (28) extending in said annular body (11) for communicating said first pressure (P1) from a first location in the control valve (1) on one axial side of said rolling diaphragm (16) to a second location in the control valve (1) on the other axial side of said rolling diaphragm (16).

2. A control valve (1) according to claim 1, wherein pressure communication channel (28) opens to two axially spaced openings in said annular body (11).

3. A control valve (1) according to claim 1 or 2, wherein
said exit openings (18) are axially extending elongated openings, and wherein said pressure communication channel (28) axially extends between two axially extending exit openings (18).

4. A control valve (1) according to claim 3, comprising a plurality of pressure communication channels (28), each pressure communication channel (28) of said plurality extending between two axially extending exit openings (18).

5. A control valve (1) according to any one of claims 1 to 4, wherein said plurality of exit openings (43) are circumferentially distributed over the circumference of the annular body (11).

6. A control valve (1) according to any one of claims 1 to 5, wherein said rolling diaphragm (16) comprises a continuous body of material.

7. A control valve (1) according to claim 6, wherein said rolling diaphragm does not have any through going openings.

8. A control valve (1) according to any one of claims 1 to 7, further comprising a flow area regulator for regulating a flow area of at least one variable size entry opening through which the liquid flowing through the control valve (1) from an inlet opening (9) to an outlet opening (7) must pass.

9. A control valve (1) according to claim 8, wherein in said arrangement for maintaining a constant differential pressure maintains a constant differential pressure over said adjustable size opening.

10. A control valve (1) according to any of claims 1 to 9, **characterized by** comprising an elongated, preferably rotation symmetric, valve body (2,4) with opposite first and second longitudinal ends, said first end being provided with a with a closable inlet opening (9).

11. A control valve (1) according to any one of claims 1 to 10, wherein said rolling diaphragm (16) is provided with a ridge (30) along its outer circumference, and wherein said ridge (30) is provided with one or more apertures (27) that connect to said at least one pressure communication channel (28).

12. A control valve (1) according to any one of claims 1 to 10, wherein said annular body (11) is provided with a rim (19), an axial side of said rim (19) being provided with a groove (23) for at least partially receiving an O-ring (17) and wherein said rim (19) is provided with a plurality of recesses (21) for allowing passage of liquid.

13. A control valve (1) according to any of claims 1 to 12, wherein said annular body (11) is slidably disposed in a cylindrical portion (4) of said valve housing (2) for allowing axial movement and rotational movement of said annular body (11) relative to said valve housing (2).

14. A manifold (40) for a floor heating system with a plurality of circuits (I,II,III,IV,V), said manifold (40) comprising an elongated tubular housing (44), said housing (44) being provided with:
a manifold outlet (43),
a plurality of sockets (42) for connection to respective return lines of circuits (I,II,III,IV,V) of the floor heating system,
said sockets (42) having a lumen and being arranged to extend through a wall of said housing (44), and
a plurality of flow control valves (1) according to any one of claims 1 to 13, each flow
control valve (1) being associated with one of said sockets (42), each flow control valve (1) comprising an elongated body (4) with a first longitudinal end that sealingly engages with its associated socket (42), and a second longitudinal end for coupling to an actuator (48), each control valve (1) further comprising an inlet (9) in fluid connection with its associated socket (42), and at least one outlet (7) in fluid connection with said manifold outlet (43).

## Patentansprüche

1. Regelventil (1) zum Regeln des Durchflusses von Flüssigkeit in einer Heizungs- und/oder Kühlanlage, das Regelventil (1) aufweisend:
eine Druckregeleinrichtung, welche dafür eingerichtet ist, einen im Wesentlichen konstanten Differenzdruck zwischen einem ersten Druck (P1) im Regelventil (1) und einem zweiten Druck (P2) im Regelventil (1) zu halten, wobei die Druckregeleinrichtung ein bewegliches Drosselelement (16) aufweist, welches durch den ersten Druck (P1) dazu gebracht wird, den Strömungswiderstand, welcher durch die Druckregeleinrichtung geleistet wird, zu erhöhen, und welches durch ein federendes Element (20) und durch den zweiten Druck (P2) dazu gebracht wird, den Strömungswiderstand, welcher durch die Druckregeleinrichtung geleistet wird, zu verringern, das bewegliche Drosselelement aufweisend eine Rollmembran (16), welche mit einer Mehrzahl von Austrittsöffnungen (18) zusammenwirkt,
die Rollmembran (16) aufweisend einen kreisförmigen Umfang, welcher an einem ringförmigen Körper (11), welcher im Regelventil (1) angeordnet ist, angebracht ist,
wobei die Mehrzahl von Austrittsöffnungen (18) radial durch den ringförmigen Körper (11) gebildet sind, **gekennzeichnet durch** mindestens einen Druckverbindungskanal (28), welcher sich im ringförmigen Körper (11) erstreckt, um den ersten Druck (P1) von einer ersten Position im Regelventil (1) an einer axialen Seite der Rollmembran (16) mit einer zweiten Position im Regelventil (1) an der anderen axialen Seite der Rollmembran (16) zu verbinden.

2. Regelventil (1) nach Anspruch 1, wobei sich der Druckverbindungskanal (28) zu zwei axial beabstandeten Öffnungen im ringförmigen Körper (11) hin öffnet.

3. Regelventil (1) nach Anspruch 1 oder 2, wobei die Austrittsöffnungen (18) sich axial erstreckende längserstreckte Öffnungen sind, und wobei sich der Druckverbindungskanal (28) axial zwischen zwei sich axial erstreckenden Austrittsöffnungen (18) erstreckt.

4. Regelventil (1) nach Anspruch 3, aufweisend eine Mehrzahl von Druckverbindungskanälen (28), wobei sich jeder der Mehrzahl von Druckverbindungskanälen (28) zwischen zwei sich axial erstreckenden Austrittsöffnungen (18) erstreckt.

5. Regelventil (1) nach einem der Ansprüche 1 bis 4, wobei die Mehrzahl von Austrittsöffnungen (18) in Umfangsrichtung über den Umfang des ringförmigen Körpers (11) verteilt sind.

6. Regelventil (1) nach einem der Ansprüche 1 bis 5, wobei die Rollmembran (16) einen durchgehenden Materialkörper aufweist.

7. Regelventil (1) nach Anspruch 6, wobei die Rollmembran keinerlei durchgehende Öffnungen aufweist.

8. Regelventil (1) nach einem der Ansprüche 1 bis 7, ferner aufweisend einen Strömungsquerschnittsregler zum Regeln des Strömungsquerschnitts mindestens einer Eintrittsöffnung variabler Größe, welche die Flüssigkeit, welche von einer Einlassöffnung (9) zu einer Auslassöffnung (7) durch das Regelventil (1) fließt, passieren muss.

9. Regelventil (1) nach Anspruch 8, wobei die Anordnung zum Halten eines konstanten Differenzdrucks einen konstanten Differenzdruck über die Öffnung einstellbarer Größe aufrechterhält.

10. Regelventil (1) nach einem der Ansprüche 1 bis 9, **dadurch gekennzeichnet, dass** sie einen längserstreckten, vorzugsweise rotationssymmetrischen, Ventilkörper (2, 4) mit entgegengesetzten ersten und zweiten Längsenden aufweist, wobei am ersten Ende eine verschließbare Einlassöffnung (9) bereitgestellt ist.

11. Regelventil (1) nach einem der Ansprüche 1 bis 10, wobei die Rollmembran (16) mit einem Steg (30) entlang ihres Außenumfangs ausgestattet ist, und wobei der Steg (30) mit einer oder mehreren Öffnungen (27) ausgestattet ist, welche eine Verbindung zu mindestens einem Druckverbindungskanal (28) bilden.

12. Regelventil (1) nach einem der Ansprüche 1 bis 10, wobei der ringförmige Körper (11) mit einem Rand (19) ausgestattet ist, wobei eine axiale Seite des Rands (19) mit einer Rille (23) ausgestattet ist, um einen O-Ring (17) mindestens teilweise aufzunehmen, und wobei der Rand (19) mit einer Mehrzahl von Vertiefungen (21) ausgestattet ist, um den Durchtritt von Flüssigkeit zu erlauben.

13. Regelventil (1) nach einem der Ansprüche 1 bis 12, wobei der ringförmige Körper (11) verschiebbar in einem zylindrischen Abschnitt (4) des Ventilgehäuses (2) angeordnet ist, um eine axiale Bewegung und eine Drehbewegung des ringförmigen Körpers (11) relativ zum Ventilgehäuse (2) zu erlauben.

14. Verteiler (40) für ein Fußbodenheizungssystem mit einer Mehrzahl von Kreisläufen (I, II, III, IV, V), der Verteiler (40) aufweisend ein längserstrecktes rohrförmiges Gehäuse (44), wobei das Gehäuse (44) ausgestattet ist mit:
einem Verteilerauslass (43),
einer Mehrzahl von Anschlüssen (42) zur Verbindung jeweiliger Rücklaufleitungen der Kreisläufe (I, II, III, IV, V) des Fußbodenheizungssystems,
wobei die Anschlüsse (42) ein Lumen aufweisen und derart angeordnet sind, dass sie sich durch eine Wand des Gehäuses (44) erstrecken, und
eine Mehrzahl von Durchflussregelventilen (1) im Einklang mit einem der Ansprüche 1 bis 13, wobei jedes der Durchflussregelventile (1) einem der Anschlüsse (42) zugeordnet ist, jedes der Durchflussregelventile (1) einen längserstreckten Körper (4) mit einem ersten Längsende, welches dichtend mit dem ihm zugeordneten Anschluss (42) in Eingriff steht, und einem zweiten Längsende zum Ankoppeln an einen Stellantrieb (48) aufweist, und jedes der Regelventile (1) ferner einen Einlass (9) in Strömungsverbindung mit dem ihm zugeordneten Anschluss (42) und mindestens einen Auslass (7) in Strömungsverbindung mit dem Verteilerauslass (43) aufweist.

## Revendications

1. Soupape de commande (1) destinée à commander l'écoulement de liquide dans une installation de chauffage et/ou de refroidissement, ladite soupape de commande (1) comprenant :
un ensemble de régulation de pression configuré pour maintenir une pression différentielle substantiellement constante entre une première pression (P1) dans ladite soupape de commande (1) et une deuxième pression (P2) dans ladite soupape de commande (1),
ledit ensemble de régulation de pression comprenant un élément d'étranglement mobile (16), lequel est sollicité par ladite première pression (P1) pour augmenter la résistance à l'écoulement générée par l'ensemble de régulation de pression et lequel est sollicité par un élément résilient (20) et par la deuxième pression (P2) pour réduire la résistance à l'écoulement générée par l'ensemble de régulation de pression,
ledit élément d'étranglement mobile comprenant une membrane à enroulement (16) interagissant avec une pluralité d'orifices de sortie (18),
ladite membrane à enroulement (16) présentant une circonférence circulaire fixée à un corps annulaire (11) disposé dans ladite soupape de commande (1), ladite pluralité d'orifices de sortie (18) étant formés radialement à travers ledit corps annulaire (11),
**caractérisée par** au moins un canal de communication de pression (28) s'étendant dans ledit corps annulaire (11) pour communiquer ladite première pression (P1) à partir d'un premier emplacement dans la soupape de commande (1) sur un côté axial de ladite membrane à enroulement (16) vers un deuxième emplacement dans la soupape de commande (1) sur l'autre côté axial de ladite membrane à enroulement (16).

2. Soupape de commande (1) selon la revendication 1, dans laquelle le canal de communication de pression (28) débouche sur deux orifices espacés axialement dans ledit corps annulaire (11).

3. Soupape de commande (1) selon la revendication 1 ou 2, dans laquelle lesdits orifices de sortie (18) sont des orifices allongés s'étendant axialement, et dans laquelle ledit canal de communication de pression (28) s'étend axialement entre deux orifices de sortie (18) s'étendant axialement.

4. Soupape de commande (1) selon la revendication 3, comprenant une pluralité de canaux de communication de pression (28), chaque canal de communication de pression (28) parmi ladite pluralité s'étendant entre deux orifices de sortie (18) s'étendant axialement.

5. Soupape de commande (1) selon l'une quelconque des revendications 1 à 4, dans laquelle ladite pluralité d'orifices de sortie (18) sont répartis circonférentiellement sur la circonférence du corps annulaire (11).

6. Soupape de commande (1) selon l'une quelconque des revendications 1 à 5, dans laquelle ladite membrane à enroulement (16) comprend un corps de matériau continu.

7. Soupape de commande (1) selon la revendication 6, dans laquelle ladite membrane à enroulement ne comporte aucun orifice traversant.

8. Soupape de commande (1) selon l'une quelconque des revendications 1 à 7, comprenant en outre un régulateur de zone d'écoulement destiné à réguler une zone d'écoulement d'au moins un orifice d'entrée de taille modifiable, à travers lequel le liquide s'écoulant à travers la soupape de commande (1) à partir d'un orifice d'entrée (9) vers un orifice de sortie (7) doit passer.

9. Soupape de commande (1) selon la revendication 8, dans laquelle ledit ensemble destiné à maintenir une pression différentielle constante maintient une pression différentielle constante sur ledit orifice de taille réglable.

10. Soupape de commande (1) selon l'une quelconque des revendications 1 à 9, **caractérisée en ce que** celle-ci comprend un corps de soupape allongé (2, 4), de préférence symétrique en rotation, avec des première et deuxième extrémités longitudinales opposées, ladite première extrémité étant dotée d'un orifice d'entrée (9) fermable.

11. Soupape de commande (1) selon l'une quelconque des revendications 1 à 10, dans laquelle ladite membrane à enroulement (16) est dotée d'une crête (30) le long de sa circonférence extérieure, et dans laquelle ladite crête (30) est dotée d'une ou de plusieurs ouvertures (27) reliées audit au moins un canal de communication de pression (28).

12. Soupape de commande (1) selon l'une quelconque des revendications 1 à 10, dans laquelle ledit corps annulaire (11) est doté d'un rebord (19), un côté axial dudit rebord (19) étant doté d'une rainure (23) destinée à recevoir au moins partiellement une bague torique (17) et dans laquelle ledit rebord (19) est doté d'une pluralité de cavités (21) permettant le passage de liquide.

13. Soupape de commande (1) selon l'une quelconque des revendications 1 à 12, dans laquelle ledit corps annulaire (11) est disposé de façon coulissante dans une partie cylindrique (4) dudit boîtier de soupape (2) pour permettre un mouvement axial et un mouvement rotatif dudit corps annulaire (11) par rapport audit boîtier de soupape (2).

14. Collecteur (40) pour un système de chauffage au sol avec une pluralité de circuits (I, II, III, IV, V), ledit collecteur (40) comprenant un boîtier tubulaire allongé (44), ledit boîtier (44) comprenant :
une sortie de collecteur (43),
une pluralité de douilles (42) pour le raccordement à des conduites de retour respectives de circuits (I, II, III, IV, V) du système de chauffage au sol,
lesdites douilles (42) présentant un lumen et étant disposées de manière à s'étendre à travers une paroi dudit boîtier (44), et
une pluralité de soupapes de commande d'écoulement (1) selon l'une quelconque des revendications 1 à 13, chaque soupape de commande d'écoulement (1) étant associée à l'une desdites douilles (42), chaque soupape de commande d'écoulement (1) comprenant un corps allongé (4) avec une première extrémité longitudinale, laquelle s'engage de façon étanche avec sa douille (42) associée,
et une deuxième extrémité longitudinale pour l'accouplement d'un actionneur (48), chaque soupape de commande (1) comprenant en outre une entrée (9) en liaison fluidique avec sa douille (42) associée, et au moins une sortie (7) en liaison fluidique avec ladite sortie de collecteur (43).
